# EUROPEAN PATENT APPLICATION

(11) **EP 1 940 122 A2**
(43) Date of publication of application: **02.07.2008**
(21) Application number: 08005396.0
(22) Date of filing: 29.10.1996
(51) Int. Cl.: H04L 29/06, H04L 12/28, H04Q 7/38

(54) **Paging system for multi-network terminals**

(30) Priority: 02.11.1995 NL 1001561
(62) Divisional of application: 96203014.4
(71) Applicant: Koninklijke KPN N.V., 2516 CK The Hague (NL)
(72) Inventor: Levelt, Willem Gerard, 2509 CH The Hague (NL); Lensink, Andrè, 2313 VG Leiden (NL)
(74) Representative: Wuyts, Koenraad Maria

(57) **Abstract**

Terminals which can communicate with more than one network in a time-shared manner must, on being called from such a network, be paged by said network. It can occur, however, that a terminal does not receive a paging message which was destined for it because it was engaged with another network at just the same time. By letting each terminal pass to the network with which it maintains a communication session the points in time at which the terminal can successfully receive and process paging messages, the problem is solved. The terminal thus functions as 'master' and the networks function as 'slave'.

## Description

### A. Background of the invention

The invention relates to a communication system, comprising networks and terminals, provided with means for initiating and maintaining communication sessions with each other, in which one terminal can simultaneously initiate and maintain time-shared communication sessions with several networks, and in which a network can transmit system messages, related to that communication session, to a terminal with which it maintains a communication session. In particular, the future Universal Mobile Telecommunications System (UMTS) is borne in mind.

A terminal as mentioned above can be available to several users simultaneously and also simultaneously form the connection between said users and several networks, for example a mobile enterprise network and the public mobile network. The users can choose domicile at a certain terminal and register themselves for certain services, for example voice, data or facsimile transmission, at one or more networks with which the terminal has a connection. Not only human users, but services (servers) also can be accommodated at a terminal.

As soon as a call for a registered user occurs in a network, the terminal where said user has chosen domicile must be called. It is suggested that paging be used for that purpose, the network transmitting the identification code for the terminal being sought, the user and the service chosen by the user, in the assumption that the terminal will react thereupon.

Problematic is that, since the terminal is connected to several networks on a time-sharing basis, the probability exists that a paging message is not received by the terminal due to it being engaged with "reading out" another network, or with exchanging information with another network, at the time the paging message is transmitted.

A possible solution is to provide terminals with several receivers operating in parallel, one for each network, which continuously read out the paging channels of all networks. That implies an unacceptable extension of the hardware of the (mobile) terminals, however. Another possibility is to provide for the synchronisation of the paging signals of the various networks, and to agree on which networks transmit their paging messages in which time slots. This solution is unattractive because that would encroach upon the independence of the networks. Another solution, the repetitive transmission of paging messages, is unacceptable because of the relatively heavy burden which the paging function would place on the transmission capacity, while it would neither then be completely guaranteed that the paging messages are always received by the terminal being sought. Another option still, transmitting all paging messages via one separate paging network, demands rather heavy additional means, while the mutual independence of the networks, an important issue in UMTS, would be encroached upon.

### B. Summary of the invention

The invention provides a solution of the paging problem without the objections mentioned. Briefly stated, the invention involves that each terminal itself passes on to the networks to which it is connected the points in time when the terminal can be successfully paged. The invention is based on the insight that only the terminals themselves have an overview of the networks with which they are connected. The networks lack said overview. As far as the paging points in time are concerned, therefore, the terminals should function as 'master' and the networks as 'slaves'.

In order to obtain a workable situation for the networks as well as for the terminals, the paging messages are transmitted per network during transmission blocks which have a fixed period and a fixed block time. It is assumed that the block periods and block times of the networks with which the terminal is connected are known at the terminal. On the basis of said network parameters, the terminal transfers the paging points in time it requires at the beginning of a session, for example, "transmit paging messages every 12 paging blocks, starting with paging block 3 as of now". The network stores said parameters with the other parameters of said terminal (terminal identifier, terminal channel and identifiers and such of the users domiciled at said terminal). These aspects are further elaborated below.

### C. Examples of embodiment

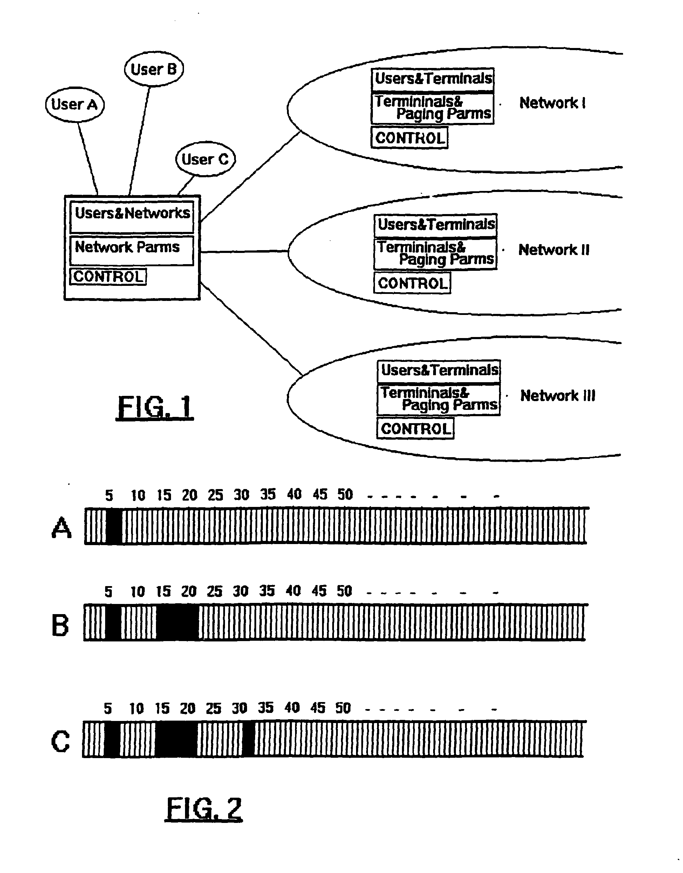

Fig. 1 shows a diagrammatic view of a communication system in which the invention is applicable. The figure shows a terminal T at which various users, A, B and C, choose domicile. They do this by reporting themselves at said terminal and entering their data. That can be done, for example, with a smart card and/or by manual data entry. In this connection it is also made known which network or which networks the user wishes to use, and for which service (telephone, data, facsimile, EDI, etc.). Said data are stored in a buffer ("users&netw.") in the terminal. User A, for example, will wish to use data network I simultaneously for receiving or transmitting EDI messages, while he/she wishes to use enterprise network 11 for telephony. User B wishes to use only the public telephone network III, while user C wishes to use data network I and the public telephone network. In order to successfully establish communication sessions with the selected networks, the terminal will need to know the necessary parameters, such as entry address and protocol, of said networks. Said parameters are buffered in the terminal ("Network parameters").

if said terminal is connected to a fixed physical network port, calls from within the network to the terminal can be simply routed to said network port (for example in a conventional fixed telephone network). This becomes different if the terminal can not be accessed via a fixed network port, as is the case in networks for mobile communication (although not only in mobile networks, but also in advanced, non-wireless "UPT" networks). In said cases, the terminal for which the message is destined must be called by a general paging message to contact the network. It was discussed above that in the case of a simultaneous connection with several networks, that is, the situation in which a terminal is registered as an accessible terminal in said networks, the terminal, however, is not able to pay continuous attention to any paging calls from within a network. Calls to a terminal should therefore only be transmitted if said terminal is prepared for receiving and processing them.

After the users have registered themselves at the terminal, the terminal establishes a connection with the various networks selected by the users and has itself (that is to say, an identifier) registered in said networks as an accessible terminal, including the data (identifiers and such) of the users who wish to be able to use said networks for certain services (user/service identifiers). In the present example, the terminal passes to network I (data network) the identifiers of users A and C, to the network II (enterprise telephone network) those of user B, and to network III (public telephone network) those of users B and C. In this way, calls from within the networks I, II and III for the users A, B and C can be transferred to terminal T. On a call, for example, from within network III for user B, network III will consult its registered data and find that user B is registered at terminal T. Thereupon a paging message for terminal T is transmitted. As soon as the terminal detects that a paging message with its identifier has been transmitted (or the user/service identifier of a user who has chosen domicile at said terminal for using, via said terminal, a service offered by the network), the terminal transmits a response code to the network III and the call can be routed to the terminal. User B is notified by the terminal T and can subsequently answer the call.

On registering itself in a network, the terminal should also transfer parameters which indicate at which points in time, or within which periods, the terminal can be successfully paged by the network. Said 'paging time' parameters are calculated within the terminal by a control unit ('Control') on the basis of the networks where the terminal has already registered itself and the paging time parameters already used in that regard, and of the optional paging time parameters which are known from the 'new' network. As far as the latter is concerned, it is possible to make use of a file of optional paging time parameters of all networks, which is already present in the terminal, with which the terminal could establish a connection. In order to be able to make use of the most current information, however, said optional parameters are preferably downloaded from the network upon the initialisation of the session or periodically, during the session. Besides said parameters always being correct, a redundant buffering in said (each) terminal of optional paging time parameters of all networks falling under consideration is also prevented.

The calculation of the paging time parameters which are to transferred to the 'new' network is performed as follows:

It is assumed that the network transmits the paging messages for the various terminals in a block, and that the mutual distance between said blocks is fixed. The mutual block distance is represented by a, and the block length by I. The terminal should indicate in which block it wishes to be paged. The problem is to determine the paging period for each network such that paging collision does not occur.

It is observed that the paging parameters constantly require revision upon changes in terminal/network combinations.

In the algorithm elaborated hereafter, N represents the number of networks, aᵢ (aᵢ ≥ aᵢ₊₁) represents the distance between the paging blocks ("block distance"), and lᵢ represents the length of the paging block ("block length") for network i. The time to the beginning of the next block is represented by dᵢ, and the time the terminal requires to switch from one network to the other ("change-over switching time") is represented by s.

First of all, the number of blocks after which network i can periodically page the terminal ("paging period"), represented by pᵢ, and the first block nᵢ falling under consideration, must be calculated. (If nᵢ = 0, the period starts at the next block; if nᵢ = 1, the period starts at the second block, etc.)

The calculation of nᵢ is performed as follows:
Assume that n₁ = 0 and T = d₁ + l₁ + s. Then for i =1, 2, 3, 4, ..., N determine nᵢ
   such that:
   1. dᵢ + (nᵢ-1) * aᵢ < T ≤ dᵢ + nᵢ * aᵢ
   2. T = dᵢ + nᵢ*aᵢ + l₁ + s ("shifting up of the time").

Hereafter pᵢ must be calculated:
Determine P as first multiple of the least common multiple of (aᵢ, ......, aₙ) such that P ≥ T - d₁. For each network, pᵢ is now determined from pᵢ = P / aᵢ.

The foregoing algorithm ensures that the paging blocks are distributed such that they do not overlap each other and that the terminal has enough time to switch over from one network to the other. By choosing the period such that it is a multiple of the greatest common divisor of the distances, it is achieved that network blocks do not shift with respect to each other. If this is nevertheless the case because, for example, the network clocks are not completely synchronised, the terminal will notice that and carry out the algorithm again if the paging blocks start overlapping each other.

On transferring the nᵢ values to the networks, the fact should be taken into account that the actual time has progressed somewhat since the moment the algorithm started. If a network has already transmitted one or more paging blocks in this period of time, these must be subtracted from the nᵢ value (modulo pᵢ).

For the determination by the network of the block in which a terminal can be paged, the networks must count their own paging blocks. Thus, upon the transmission of a paging block, a counter C is incremented by one. If a terminal t indicates that it can be successfully paged with a period of pₜ, starting with block nₜ, the following is carried out in the network:
Determine Cₜ = C + nₜ and store Cₜ and pₜ with the data relating to terminal t. If a paging message must now be transmitted to terminal t, the network determines the next suitable paging block as follows: *(div((C- Cᵢ)*, *pₜ)* + *1)** *Pₜ* + *Cₜ* (*div* meaning integer division, that is, rounded off to the first lower integer number.

It is observed that if the distance a between the blocks can be freely determined by the networks, the value of P can become very large, so that the period pₜ also becomes very large. This results in a fairly large delay in paging - and thus in the building up of the connection. This can be prevented by forcing a fixed blocking distance a on all networks.

Below, finally, another example is elaborated in which a terminal determines at which moments it wishes to be paged by three different networks. In the terminal, the above algorithm is used.

The terminal has a few users who are registered in total in three networks: N1, N2 and N3. The values for the distance a and the length l of the paging blocks of the respective networks are listed in the table below. Therein is also listed after how many time units d the next paging block starts.

| Network | a | l | d |
|---|---|---|---|
| N1 | 20 | 3 | 5 |
| N2 | 12 | 8 | 3 |
| N3 | 10 | 2 | 2 |

The change-over switching time of the terminal 1 time unit: s = 1.

The calculation starts by determining the nᵢ values.
Assume first that nᵢ = 0 and determine the following time T = d₁ + l₁ + s = 5 + 3 + 1 = 9. Network 1 may now page in the time indicated in Fig. 2A, namely from point in time 5 (d₁) to point in time 8 (dᵢ + 1).

Hereafter an iterative process follows for i = 2 and i = 3:
_i = 2: determine n₂ such that 3 + (n₂ -1)*12 < 9 ≤ 3 + n₂*12; the result is n₂ = 1. The time subsequently shifts up to after this paging block: T = 3 + 1*12 + 8 + 1 = 24. Network 2 may thus page from point in time 15 up to, but not including, point in time 23.
_i = 3: determine n₃ such that 2 + (n₃ -1)*10 < 24 ≤ 2 + n₃*10; the result is n₃ = 3. The time subsequently shifts up to after this paging block: T = 2 + 3*10 + 2 + 1 = 35. Network 3 may thus page from point in time 32 up to, but not including, point in time 34.

Now the value for pᵢ must still be determined:
- first determine P = l.c.m. (20, 12, 10) = 60, since 60 ≥ T - d = 35 - 5 = 30. The values for pᵢ are now: p₁ = 60/20 = 3, p₂ = 60/12 = 5, and p₃ = 60/10 = 6.

### D. References

Leih, G.; Lensink, A.; Levelt, W.G. "The impact of multi-user terminals" RACE MOBILE Workshop, Amsterdam, May 1994

## Claims

1. Communication system, comprising networks and terminals, said networks and terminals provided with means for initiating and maintaining communication sessions with each other, in which one terminal can simultaneously initiate and maintain time-shared communication sessions with at least a first network and a second network and in which the first network and the second network can transmit to a terminal system messages relating to said communication session, **characterised in that** the terminal downloads from said first network and said second network paging time parameters which the terminal can use to determine when it can receive said system messages.

2. A method for communication, in a communication system comprising networks and terminals for initiating and maintaining communication sessions with each other, in which one terminal initiates and maintains time-shared communication sessions with at least a first network and a second network and in which the first network and the second network transmit to a terminal system messages relating to said communication session, **characterised in that** the terminal downloads from said first network and said second network paging time parameters which the terminal can use to determine when it can receive said system messages.

3. A mobile terminal for use in a communication system, comprising networks and terminals, said networks and terminals provided with means for initiating and maintaining communication sessions with each other, in which one terminal can simultaneously initiate and maintain time-shared communication sessions with at least a first network and a second network and in which the first network and the second network can transmit to a terminal system messages relating to said communication session, **characterised in that** the terminal downloads from said first network and said second network paging time parameters which the terminal can use to determine when it can receive said system messages.

4. A method for use in a mobile terminal, in a communication system comprising networks and terminals for initiating and maintaining communication sessions with each other, in which one terminal initiates and maintains time-shared communication sessions with at least a first network and a second network and in which the first network and the second network transmit to a terminal system messages relating to said communication session, **characterised in that** the terminal downloads from said first network and said second network paging time parameters which the terminal can use to determine when it can receive said system messages.
